# EUROPEAN PATENT APPLICATION

(11) **EP 3 358 082 A1**
(43) Date of publication of application: **08.08.2018**
(21) Application number: 17154341.6
(22) Date of filing: 02.02.2017
(51) Int. Cl.: E01F 9/559, E01F 9/582

(54) **SMART ELECTROLUMINESCENT MARKER**

(71) Applicant: Yess Lightning B.V., 6167 RD Geleen (NL)
(72) Inventor: Teunissen, Dirk Berend, 3851 SG Ermelo (NL)
(74) Representative: Nederlandsch Octrooibureau

(57) **Abstract**

The invention relates to a marker comprising a container encompassing an electroluminescent light-emitting element which controllable luminesces. Furthermore, the invention relates to said marker, wherein the luminescence of the marker is provided with means for adapting to signals sensed in the surrounding of the marker. The invention also relates to the use of the marker interactively for guiding and controlling movement of objects and subjects.

## Description

### TECHNICAL FIELD OF THE INVENTION

The invention relates to a marker comprising a container encompassing an electroluminescent light-emitting element which controllable luminesces. Furthermore, the invention relates to said marker, wherein the luminescence of the marker is provided with means for adapting to signals sensed in the surrounding of the marker. The invention also relates to the use of the marker interactively for guiding and controlling movement of objects and subjects.

### BACKGROUND OF THE INVENTION

Current markers such as road markers are of the conventional retro-reflective type or of the emissive type using light-emitting diodes (LEDs).

Retro-reflective type markers require illumination with an external source of light, such as the light provided by conventional road-side streetlights. Such streetlights consume a relatively high amount of energy. Since such streetlights are positioned far above the marker, light transfer to the retro-reflective material of the marker is not efficient. Moreover, net energy consumption by the streetlights is further negatively influenced by the fact that such lights are switched on night-time long, at minimum.

Markers using LEDs have the disadvantage that such LEDs degrade over time and lose power efficiency. LEDs suffer from a change in the wavelength of the emitted light, resulting in a migration in the color spectrum towards a different color. Moreover, high energy consumption by a marker using LEDs is of concern.

Use of both types of conventional markers, such as road markers, results in the disadvantageously pollution of the surrounding of the markers by continuously emitted light. Either by the streetlights required to illuminate the passive markers, or by the continuously emitting LEDs based markers.

Such conventional markers have the further disadvantage that the guidance provided by the markers is not specifically directed in any way towards the needs of the vehicle or subject in need of such guidance. In fact, a vehicle or subject approaching a conventional marker and being in need of any guidance to be provided by the marker, is confronted by a marker not only illuminated at and near the actual position of the subject or vehicle, but in contrast by a marker illuminated over a wide area or distance. This way, receiving the required local guidance by the marker is hampered.

In US application US 2007/0223996 a road side marker is described, which marker is provided with *e.g.* an automated emergency services notification or a traffic alert system. The road side marker has electroluminescent properties and includes an electronic control system. The road side marker is equipped with an electronic circuit to transmit signals to, and receive signals from devices at remote locations. The emitted color is tunable and the marker is actuable. The road side marker of US 2007/0223996 takes the form and shape of a rectangle or cone to be adhered to an individual, moveable object such as a pavement marker, a safety cone, a barrel, a roadside marker pole, a warning sign and the like, all having limited dimensions in the order of lengths of between a few centimeters up to a few tens of centimeters, at most. Indeed, in order to span a significant length of *e.g.* a road, with the road side marker of US 2007/0223996, such a series of road side markers is placed at an interval of about a few cars length apart along the side of the road. Herewith, the distance of the road between two subsequent road side markers is deprived of any object capable of providing any guidance by luminescing. Since a road track requires numerous separately spaced road side markers, all these individual markers have to be integrated separately in the control system. Furthermore, the road side markers are unsuitable for, for example, heavy duty use if such markers were integrated in *e.g.* road linings on or in the surface of *e*.*g*. highways and the like, at the position where vehicles move across the markers, since they lack measures required to resist the accompanied wear.

Thus, in view of the above, a need exists for a marker system having dimensions comprising a nearly infinite length, i.e. spanning a distance of centimeters to meters to kilometers, and an improved range of encompassed widths, to be covered by a single marker. Also a need exists for a marker system that combines such near unlimited range of dimensions covered, with an improved energy consumption, when compared to *e.g.* LEDs based markers. Besides, these needs are completed by the need for such improved marker system of being capable of receiving signals, such as signals received from connected sensors, which are then controllably or autonomously translated and transformed in adjustments of the luminescent light.

### SUMMARY OF THE INVENTION

A first aspect of the present invention relates to a marker comprising a container, said container comprising at least a top surface part and a bottom surface part, the container encompassing an inner-component, said inner-component comprising at least two conducting layers, an integrated electric circuit electrically connected thereto, and an electroluminescent light-emitting element comprising at least one electroluminescent pigment, wherein said electroluminescent light-emitting element is embedded between a conducting anode layer and a conducting cathode layer for driving said electroluminescent light-emitting element and wherein at least the conducting layer located near the top surface part of the container and at least said top surface part of the container are made of optically transparent material or optically opaque material, and wherein the container is provided with means arranged for supplying electrical power to said conducting layers.

In an embodiment of the invention, the integrated electric circuit of the marker is further provided with a dimmer and/or a momentary switch to dim and/or to actuate the luminescing of the electroluminescent light-emitting element.

The marker according to the invention is further characterized by the integrated electric circuit being provided with means for receiving a signal, preferably wireless means, said signal provided by preferably at least one sensor, an antenna and/or a reflector, more preferably at least one sensor, such that the activation of the momentary switch and/or the activation of the dimmer is controlled by the intensity of the received signal.

The marker of the invention has a length of between about 1 cm and about 100 km, and a width of between about 1 cm and about 100 m.

The marker of the invention takes virtually any form and is for example provided as an extended body, *e.g.* a tube several kilometers in length, or a strip several meters in length and several centimeters in width.

It is part of the invention that a marker according to the invention has a sensor which is one or more of a sensor for sensing light intensity, number of passing objects such as vehicles, velocity of passing objects, moisture at or surrounding the marker, fog, type and/or intensity of precipitation, temperature, smoke, motion of an object in the surrounding of the marker, motion of the marker, flue, fire, wear of the marker, day light intensity, an object.

An embodiment of the current invention is the marker according to the invention, wherein the luminescence of the electroluminescent light-emitting element is remotely controllable. This way, functioning of the marker with regard to luminescent light emission is adjustable to the circumstances in an interactive manner.

Furthermore, the invention provides a marker according to the invention, wherein the integrated electric circuit comprises a microprocessor such that the luminescence of the electroluminescent light-emitting element is programmable.

A second aspect of the current invention is the use of a marker according to the invention, for guiding the movement of at least one object such as a vehicle, and/or of at least one subject, by providing with the marker a predetermined intensity and/or at least one color of the luminescence of the electroluminescent light-emitting element, and/or by providing with the marker a predetermined alternation of the intensity and/or alternation of at least one color of the luminescence of the electroluminescent light-emitting element, such that the movement of the object and/or the subject is within a predetermined range of velocity and/or in a predetermined direction.

It is part of the invention that the marker of the invention is for heavy duty use, such as use in or on the surface of roads such as highways. The wear resistance is accomplished by application of wear-resistant material for the container comprised by the marker, which container protects the encompassed electroluminescent light-emitting element.

### DEFINITIONS

The term "conductive layer" as used herein has its conventional meaning and refers to a layer of material, said material capable of conducting electricity.

### BRIEF DESCRIPTION OF THE DRAWINGS

Figure 1. A cross sectional view of a marker constructed according to an embodiment of the invention.
Figure 2. A schematic drawing of a marker constructed according to a second embodiment of the invention.
Figure 3. A schematic cross-sectional view of a marker constructed according to a third embodiment of the invention.
Figure 4. A schematic representation of a marker constructed according to a fourth embodiment of the invention.
Figure 5. A schematic representation of a marker constructed according to a fifth embodiment of the invention.
Figure 6. A cross-sectional view of a marker according to a sixth embodiment of the invention.
Figure 7. A cross-sectional view of a marker according to a seventh embodiment of the invention.

### DETAILED DESCRIPTION OF THE INVENTION

A first aspect of the present invention relates to a marker comprising a container, said container comprising at least a top surface part and a bottom surface part, the container encompassing an inner-component, said inner-component comprising at least two conducting layers, an integrated electric circuit electrically connected thereto, and an electroluminescent light-emitting element comprising at least one electroluminescent pigment, wherein said electroluminescent light-emitting element is embedded between a conducting anode layer and a conducting cathode layer for driving said electroluminescent light-emitting element and wherein at least the conducting layer located near the top surface part of the container and at least said top surface part of the container are made of optically transparent material or optically opaque material, and wherein the container is provided with means arranged for supplying electrical power to said conducting layers.

An advantage of the current invention is the application of a marker comprising a container, said container fully embracing, amongst other components, the electroluminescent light-emitting element and the two electrodes sandwiching said electroluminescent light-emitting element. Herewith, application of any moisture repellent measures has become superfluous, since the container of the marker of the invention provides for such moisture protection. Furthermore, the container of the marker of the invention provides strength to the marker and support to the electroluminescent light-emitting element. By applying a container having at least the upper part made of essentially transparent material or opaque material, light emitted by the electroluminescent light-emitting element is emitted virtually unhindered and unfiltered through the transparent or opaque upper side part of the container wall. Thus, the invention provides for a more robust marker consisting of a minimal number of components and an improved measure for securing the EL against exposure to moisture. Furthermore, by applying a container as the outer surface exposed to the exterior of the marker, the types of applicable material or combinations of materials suitable to be selected for the container wall is expanded. Furthermore, with the marker of the invention, the robustness and wear resistance is improved by selecting first at least one certain type of strong and wear-resistant material for constructing the container, and second by applying the one or more materials at a desired container wall thickness, thereby strongly influencing the strength and wear resistance of the marker.

An embodiment of the invention is the marker according to the invention wherein the integrated electric circuit is further provided with a dimmer and/or a momentary switch to dim and/or to actuate the luminescing of the electroluminescent light-emitting element.

Incorporating a dimmer and/or a momentary switch in the marker of the invention provides the possibility to control and adjust the luminescence of the electroluminescent light-emitting element, *e.g.* in time and/or in intensity, *e.g.* ultimately by switching the EL on or off for a predetermined length of time. Herewith, the luminescence by the marker of the invention is adjustable to the demands imposed by the circumstances, *i.e.* by a need to provide guidance to approaching vehicles and/or subjects, when the marker is for example provided at the road surface or at the side or floor or ceiling of a (public transport) vehicle, a train platform, a building (indoor, outdoor), *etc.* Furthermore, the momentary switch provides the beneficial opportunity to switch off, and herewith thus safe energy, the EL during *e*.*g*. day time, or during periods in time in which the immediate surrounding of the marker is idle, that is to say, when no *e*.*g*. vehicles or subjects needing guidance, information or direction to be provided by the marker, are in close proximate of the marker. The dimmer provides the beneficial opportunity to (manually or autonomously) adapt the intensity of the luminescence emitted by the electroluminescent light-emitting element, such that for example during the period of twilight, or during foggy weather conditions, the light intensity is adjustable to the actual needs in order to provide for *e.g.* clearly visible and sufficiently intense luminescent light. Of course, to the extreme, during daytime the dimmer is to be used to provide luminescence at minimal intensity as requested by the circumstances, whereas during periods of darkness, either outdoor or indoor, intensity of the emitted luminescent light is adjusted to increased levels, ultimately up to its maximum intensity.

An embodiment of the invention is the marker according to the invention, wherein the whole surface of the container is made of optically transparent material or optically opaque material. Of course, the container is also provided with a combination of optically transparent material and optically opaque material, if beneficial to the marker's purpose and application.

One benefit of the container completely constructed of transparent material and/or opaque material is the absence of constraints with regard to the positioning of the marker related to the desired direction and path available for the emitted luminescent light. No matter how the marker is *e.g.* adhered or placed on a surface, the container is able to let the light emitted by the electroluminescent light-emitting element freely pass in all directions. Of course, it is beneficial for the purpose of maximizing light intensity in a selected direction, to position the marker in such orientation that the surface area of the transparent electrode layer is pointing in the (main) direction intended for the emitted luminescent light.

An embodiment of the invention is the marker according to the invention, wherein the optically transparent or optically opaque container is made of a material selected from: glass made of acrylate resin, two-component epoxy resin, two-component polyurethane resin, one-component polyurethane resin, polyester resin, silicone, polycarbonate plastic, polyvinyl chloride, plastisol, polypropylene, polyethylene and thermoplastic, preferably glass made of acrylate resin, polyester resin, a polyurethane resin, a polyurethane acrylate resin and silicone.

Many more materials or combinations of materials are known in the art and suitable for the purpose of providing a fully or partially transparent or optically opaque container of the marker of the invention. The constrains to such materials are reduced to the ability to essentially provide unhindered passing of the light emitted by the electroluminescent light-emitting element, whereas at the same time a container construction is provided that for example has the capacity to resist the strengths of *e.g.* vehicles or subjects driving or passing over the marker for prolonged period of time and in accumulating and large numbers. Particularly preferred is a container made of a polyurethane acrylate resin. Equally preferred is a container made of epoxy resin.

An embodiment of the invention is the marker according to the invention, wherein the anode layer and the cathode layer are selected from: indium, carbon, nanotubes comprising conducting coating, film comprising graphene, silver nanowire covered with graphene, intrinsically conducting polymer or conducting polymer such as polyaniline and poly(3,4-ethylenedioxythiophene) polystyrene sulfonate, and inorganic conducting materials comprising aluminum, gallium, and indium, and doped zinc oxide such as zinc oxide doped with aluminum, gallium or indium, wherein the anode layer and the cathode layer preferably are the same.

The preferred conductive materials to be used for the electrode layer, *i.e.* the conductive layer, are for example metals, conductive carbon and semiconductors. More specifically, preferred conductive layers according to the invention are electrode layers comprising at least one material selected from: copper, silver, gold, zinc, cadmium, aluminum, indium, carbon, silicon, germanium, tin, lead, antimony, bismuth, selenium, tellurium, titanium, zirconium, niobium, tantalum, molybdenum, tungsten, manganese, rhodium, palladium, platinum, thorium, alloys of these metals, conductive carbon, conductive nitrides such as titanium nitride, and semiconductors such as zinc arsenide, cadmium arsenide, zinc antimonide, cadmium antimonide, silver sulfide, copper sulfide, aluminum antimonide, gallium arsenide, gallium phosphide, gallium antimonide, indium phosphide, indium arsenide, indium antimonide, indium oxide, tin oxide, titanium monoxide, zinc oxide, bismuth oxide, manganese dioxide, tungsten oxide, zinc selenide, zinc telluride, cadmium sulfide, cadmium selenide, cadmium telluride, copper iodide, silver iodide, lead sulfide, lead selenide, lead telluride, mercury telluride, tin sulfide and tin telluride. Among them, C, W, Au, Pd, Ta, Al, TiO, In₂O₃ and SnO₂ are more preferred.

An embodiment of the invention is the marker according to the invention, wherein the length and the width of the electroluminescent light-emitting element and the length and the width of the two conducting layers essentially coincide with the length and the width of the container, and wherein the length of the integrated electric circuit essentially coincides with the length of the container. A further embodiment of the invention, is the marker according to the invention, wherein the length of the electroluminescent light-emitting element and the length of the two conducting layers and the length of the integrated electric circuit essentially coincide with the length of the container, whereas the width of the electroluminescent light-emitting element and the width of the two conducting layers is considerably smaller than the width of the container.

An embodiment of the invention is the marker according to the invention, wherein the inner-component has a thickness of between about 200 micrometer and about 2 millimeter, preferably about 500 micrometer, or about 1 mm.

A particularly preferred marker according to the invention, is a marker having an inner-component with a thickness of between about 35 micrometer and about 950 micrometer, preferably about 85 micrometer.

Since the assembly of electrodes, integrated electric circuit and electroluminescent light-emitting element has a layered structure with a thickness of less than about 2 millimeter, e.g. about 500 micrometer or about 1 mm or about 85 micrometer, the surface area of a cross section of the container is be chosen starting from relatively small dimensions, *e*.*g*. a container with an essential tubular shape having an inner diameter of less than 5 cm, for example about 3 cm. Of course, also containers having larger dimensions in any cross sectional direction are applicable in the container of the marker of the invention, though for many applications the width and thickness of the container, or the diameter of the container are selected as small as possible in order to *e.g.* save material and improve the convenience of processing the marker.

An embodiment of the invention is the marker according to the invention, wherein the anode layer has a thickness of between about 10 micrometer and about 250 micrometer, preferably about 25 micrometer, the cathode layer has a thickness of between about 10 micrometer and about 250 micrometer, preferably about 25 micrometer, and the electroluminescent light-emitting element has a thickness of between about 15 micrometer and about 450 micrometer, preferably about 35 micrometer.

An embodiment of the invention is the marker according to the invention, wherein the anode layer has a thickness of about 25 micrometer, the cathode layer has a thickness of about 25 micrometer, and the electroluminescent light-emitting element has a thickness of about 35 micrometer.

According to the invention, dimensions of the two electrodes and the electroluminescent light-emitting element are selected to be as minimal as possible. Not only to save material, though also for the purpose of limiting the size of the marker containing the electrodes and the electroluminescent light-emitting element inside the container, thereby improving the ease of handling and enlarging the number of possible applications, according to the invention. Of course, size limitations of the electrodes and the electroluminescent light-emitting element are mainly determined by the intensity of the emitted luminescent radiation required for the purpose at hand. For example, application of the marker of the invention in an office building indoor emerging routing plan requires smaller maximal dimensions of the electrodes and electroluminescent light-emitting element than for example application of the marker in an outdoor signaling and tracking system on an airport landing ground, for the purpose of directing incoming air vessels to the proper landing ground and the selected platform to be taxied to after landing, according to the invention. Typically, the overall thickness of the two electrodes and the electroluminescent light-emitting element is between about 200 micrometer and 1 mm, preferably about 500 micrometer, preferably less.

An embodiment of the invention is the marker according to the invention, wherein the container is an extended container, such as a tube, a ribbon, a strip, a beam, preferably a tube or a strip.

One of the many advantages of the marker of the current invention is the freedom to apply an electroluminescent light-emitting element and matching electrodes having a major surface area which has a relatively extended length in one dimension. Actually, it is now due to the invention that markers of the invention are made in virtually any shape and accompanying size, as desirable by the circumstances. An "extended" length as used herein refers to the marker comprising a container having a length that is multiple times larger than the accompanying width and/or thickness of the container of the marker of the invention, and when the container has the shape of a tube or the like (*e*.*g*. a shape with an essentially circular or ellipsoidal cross section, *etc*.), multiple times larger than the accompanying (largest) diameter of the tube or the like. "Multiple times larger" has to be understood as at least about once, twice, thrice, *etc*., up to about ten times or hundred times longer than the dimension of the width or the diameter of the container. In fact, a container with any (extended) shape or any form applicable for accommodating the inner-component of the marker is suitable for application in the marker of the invention. That is to say, for example a container with an extended form with a triangular cross section is used in the marker of the invention, or a container with an ellipsoidal or squaric cross section are used, although a strip or a tube are preferred for many applications of the marker, according to the invention.

According to the invention the marker has a container which can adopt virtually any desired shape as long as, amongst other components, the two electrodes and the electroluminescent light-emitting element are properly encompassed by the container. In addition to the shapes such as a rod, a tube, a strip, a ribbon, *etc.,* the container also has shapes such as an arrow, a circle, a number, a letter, text, a form such as a bicycle, any (traffic) sign, a square, a triangle, an ellipse, *etc.,* according to the invention.

An embodiment of the invention is the marker according to the invention, wherein the extended container has a length of between about 1 cm and about 100 km, preferably between about 50 cm and about 30 km, more preferably between about 100 cm and about 10 km, most preferably between about 10 m and about 1 km.

According to the invention, a marker comprising a container with such an extended length of between one or a few centimeters up to dozens of kilometers, is particularly suitable for applications such as emergency lining, road side marking, middle of the road marking, driving lanes marking, train platform lining, (indoor, outdoor) exiting route lining, helicopter platform marking, marking of the grounds of an airport, *etc.* For example, for marking the lanes and the side of *e.g.* a highway, it is particularly beneficial to apply the marker of the invention encompassing a container having a length of one to several dozens of kilometers. According to the invention, such an extended marker of the invention still is controllable, for example remotely controllable, or functioning autonomously, all at once, through *e.g.* a single remote controller coupled to the integrated electric circuit. Herewith, improved supervision and improved control over the marker extended over a considerable large track of *e.g.* a highway, is established, contributing to improved guidance to the vehicles and drivers moving along the marker of the invention, and in need of adaptable signaling as to for example related to oncoming traffic jam, closed lane, junction. That is to say, the marker of the invention is used for example to inform the drivers driving alongside the marker of the invention implemented on or in the surface of *e.g.* a highway, by switching the marker on or off, or by changing the luminescence from one marker to another one, for example to direct traffic to a different lane, *etc.*

An embodiment of the invention is the marker according to the invention, wherein the extended container has a width of between about 1 cm and about 100 m, preferably between about 2 cm and about 30 m, more preferably between about 5 cm and about 10 m, most preferably between about 10 cm and about 1 m.

The marker of the invention is provided with a width suitable for a plethora of purposes. For example, a marker of the invention comprises a container with a width of between 2 cm and 12 cm, for example about 10 cm, which is particularly suitable for application in linings and as signs, text, *etc*., such as for emergency exit routing inside buildings, underground parking lots, cellars, and the like, and such as road side markings, lines, signs, text and stripes at or partially in the surface of pavements, roads, highways, cycle paths, sidewalks, train platforms, *etc.* The length of such markers according to the invention is for most applications at least an order of magnitude larger than the width of the container comprised by the marker of the invention. In particular, a marker according to the invention has a width encompassing for example completely or partly the width of a driver lane, a road, a race circuit, one or several or even all lanes of a road such as a highway, for example the one or more highway driver lanes approaching the gate of a toll booth. For example, a marker of the invention is used as a dynamic stop sign in a lane of a road, *e*.*g*. when a lane is (temporarily) blocked due to a red traffic light, an open bridge, a crossing train, an accident, traffic congestion, *etc.* Such marker is then for example switched off using a momentary switch that is remotely controllable, and switched on when required, *e*.*g*. emitting red-colored luminescent radiation.

An embodiment of the invention is the marker according to the invention, wherein at least one voltage converter is electrically connected to the integrated electric circuit, for electrically connecting the power supply to the marker.

It is part of the invention that the marker of the invention is provided with electrodes functioning with a voltage of between about 1 Volt and about 1000 Volt, preferably between about 1 Volt and 24 Volt, more preferably about 6 Volt, for a direct current application (DC), or that the marker of the invention is provided with electrodes functioning with a voltage of between 1 Volt and 1000 Volt, preferably about 120 Volt or about 240 Volt, for an alternating current application (AC), said voltages provided for by one or more voltage converter(s). In particular, markers of the invention comprise electrodes driving the electroluminescent light-emitting element at a voltage of for example about 6 V, about 12 V or about 24 V. For example, a marker of the invention comprises as the converter an AC/DC adapter receiving an input voltage of between 100 V and 240 V, providing a voltage to the anode of the inner-component of 24 V, resulting in a current of about 3A. In yet another example, a marker of the invention comprises an AC/DC adapter receiving an input voltage of between 100 V and 240 V, providing a voltage to the electrode of the anode of the inner-component of 12 V. It is part of the invention that the marker of the invention is construed in such a manner that the input voltage varies over a relatively wide range of voltages, *e*.*g*. between about 0.2 V and 240 V, or between 240 V and 20.000 V, or at about any of 240 V, 120 V, 110 V, 30 V, 12 V, 6 V. Typically, the electroluminescent light-emitting element in the marker of the invention consumes between about 0.3 Watt and 2 Watt per square meter, for example about 1 Watt per square meter. Typically, the electroluminescent light-emitting element in the marker of the invention provides for a lumen output of on average between about 70 candela and 120 candela. Such combinations of energy consumption and lumen output make the marker of the invention superior with regard to energy consumption when *e.g.* compared to application of conventional LEDs in *e.g.* road marking. In particular, the electroluminescent light sources in the marker of the invention consume down to about a half percent of the energy consumed by LEDs to be applied to be able to arrive at the similar lighted surface area to a similar light intensity. Furthermore, application of the marker of the invention makes the use of many if not all streetlights such as streetlights alongside highways, superfluous. Next to the enormous reduction in the energy consumption when switching from conventional streetlights to the marker of the invention, the marker of the invention furthermore comes with a reduced risk for health problems since the marker of the invention does not release metal vapor, which release of metal vapor does occur when using conventional streetlights comprising gas discharge lamps. A further advantage of the use of the marker of the invention, when compared to conventional passive markers illuminated from above using streetlights, is the more robust emission of luminescent light under influence of external circumstances, such as heavy rainfall and the like. That is to say, coverage of the marker of the invention does not hamper the performance of the electroluminescent light-emitting element with regard to the intensity of the emitted light under influence of a layer of for example rain water on top of the marker. In contrast, performance of conventional markers which have to be illuminated with streetlights, is severely hampered as a result of any precipitation on top of the marker.

An embodiment of the invention is the marker according to the invention, wherein two or more voltage converters are electrically connected to the integrated electric circuit at interval distances of between about 2 cm and 2000 m along the length of the container, preferably at interval distances of between about 1 m and about 150 m, more preferably at an interval distance of between about 35 m and about 70 m.

An important advantage of the marker of the invention is its extended length, compared to its width and thickness. By application of the electroluminescent light-emitting element in the marker according to the invention, use of the marker of the invention for, for example, the road marking of highways and the like, is possible while applying a single marker of the invention for covering *e*.*g*. several kilometers of highway track. For such markers of the invention having a container with a length of over a couple of dozens of meters, application of a voltage converter at set interval distances along the length of the marker is part of the invention. For example, a series of voltage converters is electrically connected to the integrated electric circuit at interval distances of about 35 m or about 70 m, or even at longer interval distances. This way, a marker of the invention is provided with a beneficial extended length compared to conventional markers, accompanied with a virtually monotonous light output with regard to the intensity, alongside the whole length of the marker, according to the invention.

An embodiment of the invention is the marker according to the invention, wherein the electroluminescent light-emitting element comprises at least two electroluminescent pigments that luminesce at different wavelengths, wherein the at least two electroluminescent pigments are spatially separated, such that the marker can luminesce at least two colors.

The marker of the invention is provided with an electroluminescent light-emitting element comprising an electroluminescent pigment of a single type, or comprising two or more pigments of different types. With the markers of the invention comprising a single type of electroluminescent pigment, a single color is emitted, such as white, yellow-green, red, magenta, blue, dark blue. One of the many benefits of the invention, however, is now the marker of the invention comprising multiple electroluminescent pigments of a different kind. This way, it is now possible to provide a marker capable of emitting a wide range of different colors, either simultaneously, or one after another. For example, a marker of the invention comprises an electroluminescent light-emitting element comprising spatially separated lanes of two, three or four, or even more, for example up to eight, different electroluminescent pigments. For example, a marker of the invention comprises an electroluminescent light-emitting element comprising spatially separated lanes of four different electroluminescent pigments, capable of separately emitting red light, green light, blue light and white light, according to the invention.

The marker of the invention being capable to emit light of different colors opens the way to new applications, according to the invention. With the marker of the invention, it is for example now possible to switch the color of the emitted light by the marker, when desired by the circumstances. Turning the marker from green emitting light marker to red emitting light marker is beneficial in guiding and directing movement of *e.g.* vehicles, pedestrians, airplanes, *etc.*

An embodiment of the invention is the marker according to the invention, wherein the bottom surface part of the container is provided with means to adhere the marker to a surface material, such as an adhesive layer for adhering the marker to a surface material.

The marker of the invention has numerous beneficial applications. For example, the marker of the invention is applied as an electroluminescent lining or marking such as for a pedestrian crossing, on highways, at parking lots, in a parking garage, *e.g.* for directing an entering vehicle to a free parking lot or for directing an exiting car to the exit, on railway platforms, bus terminals, railway stations, airports, roads with toll gates, in public transport vehicles such as metro, train, bus, aircraft, ferry, vessel, ship, *etc.,* in warehouses, for example at the ground surface or at the ceiling or for marking stored goods, in stockrooms, in stadiums such as soccer stadiums, in offices, universities, schools, in public space such as in and outside public buildings, hospitals, in museums, theatres, movie theatres, conference halls, department stores, malls such as shopping malls, and many more outdoor or indoor locations. The marker of the invention takes the form of an extended lining, or takes the form of any alternative shape applicable to its intended purpose of guiding, informing and directing subjects such as subjects driving vehicles, according to the invention. For many of the intended applications of the marker of the invention, the marker is beneficially supplied with any means suitable for adhering the marker to a surface, being it either temporary adherence or permanent adherence, *i.e.* a horizontal surface such as a road, floor, a ceiling, *etc.,* or a vertical surface, such as for example a wall inside or outside a building, or the side of a vehicle such as used in any form of public transport, or a surface tilted to any degree between horizontal and vertical.

An embodiment of the invention is the marker according to the invention, wherein the surface material is made of any one or more selected from: concrete, asphalt, steel, wood, plastic, glass, fabric, glass made of any of acrylate resin, epoxy resin, two-component polyurethane resin, one-component polyurethane resin, polyester resin, acrylic resin, halogen resin, alkyd resin, epoxy resin, and polyvinylchloride, polypropylene, polycarbonate and polystyrene.

According to the invention, numerous applications for the marker of the invention are suitable. Such applications come with the need for temporarily or permanently adhering the marker to an equally broad array of possible surface materials. Therefore, it is part of the invention that the container comprised by the marker of the invention, is supplied with means suitable for temporarily or permanently adhering to any type of surface material or any combination thereof, for example selected from the non-limiting list encompassing concrete, asphalt, steel, wood, plastic, glass, fabric, glass made of any of acrylate resin, epoxy resin, two-component polyurethane resin, one-component polyurethane resin, polyester resin, acrylic resin, halogen resin, alkyd resin, epoxy resin, and polyvinylchloride, polypropylene, polycarbonate and polystyrene.

An embodiment of the invention is the marker according to the invention, wherein the at least one electroluminescent pigment is selected from: zinc oxide, aluminum oxide and a mixture of zinc oxide and aluminum oxide, said pigment comprising one or more selected from: SrAl₂O₄: Eu, Dy, and Sr₄Al₁₄O₂₅:Eu²⁺Dy₃, and Sr₂MgSi₂O₇;Eu²⁺, and CaAl₁₂O₄:Eu²⁺, Nd³⁺, and Y₂Al₂O₄: Eu²⁺, Nd³⁺, and CaAl₂O₄; Eu²⁺, Nd³⁺, and Y₂Al₂O₄:Eu²⁺, Nd³⁺, and Al₂O₃ and ZnO, or selected from ZnS such as ZnS:Cu, YAG and ZnS;Cu, Mn, and ZnS:Cu, Dy, and ZnS:Cu, Al, and (Zn, Cd) S:Cu (Zn Cd) S:Cu, and ZnS:Cu, Mn, and ZnS:Cu, Mn, and (Zn, Cd)(S,Se):Cu, preferably the electroluminescent pigment is ZnS: Cu, Al.

As said before, it is now due to the configuration of the marker of the invention, that the marker equally beneficially comprises an electroluminescent light-emitting element comprising an electroluminescent pigment of a single type, or comprises an electroluminescent light-emitting element comprising more than one electroluminescent pigment of a plurality of types. Such pigments are known in the art, and the above mentioned series of pigments suitable for incorporation in the marker of the invention is therefore non-limiting. For example, in a marker of the invention, aluminum oxide is applied said aluminum oxide comprising Y₂Al₂O₄: Eu²⁺, Nd³⁺. Particularly beneficial is the use of the pigment ZnS: Cu, Al in the electroluminescent light-emitting element applied in the marker of the invention.

An embodiment of the invention is the marker according to the invention, wherein the extended container is a tube with an outer-diameter of between about 0.5 cm and about 5 cm, preferably about 3.5 cm, and with an inner diameter of about 0.4 cm and 4.9 cm, preferably about 3.0 cm, wherein the tube is made of polyurethane acrylate resin, wherein the electroluminescent pigment is ZnS: Cu, Al.

Such a marker of the invention comprising said tube and with the electroluminescent light-emitting element comprising ZnS: Cu, Al, is particularly suitable for application in *e.g.* a slit milled in the surface of *e.g.* a road or a railway platform. Equally applicable is the use of said marker on *e.g.* the inside walls of a public transport vehicle or on the walls or ceiling of *e.g.* an office building, for the purpose of providing emergency exit routing and the like. Preferably, the container forming the tube is made of a polyurethane acrylate resin. Preferably, the electroluminescent light-emitting element comprises for example four different electroluminescent pigments capable of emitting white, blue, red and green light. Preferably, the inner diameter of the tubular container is about 3 cm. Typically and preferably, the thickness of the two electrodes and the electroluminescent light-emitting element is about 150 micrometer to about 1 mm, such as about 200 micrometer or about 500 micrometer, according to the invention.

An embodiment of the invention is the marker according to the invention, wherein the extended container is a strip with a length of between about 1 cm and about 100 m, a width of between about 10 cm and 100 m, a thickness of between about 0.5 cm and about 5 cm, preferably the length is between about 25 cm and about 10 m, preferably the width is between about 50 cm and about 50 m, preferably the thickness is between about 1 cm and 2 cm, wherein the strip is made of epoxy resin, wherein the electroluminescent pigment is ZnS: Cu, Al.

Such a marker of the invention comprising a container shaped as a strip, or a line, is particularly suitable for application as markings alongside railway platforms, on airport grounds, landing tracks for planes, linings on roads such as highways and the like. As an example, the marker of the invention comprises a container shaped as an extended line made of for example epoxy resin optionally supplied with a layer of glass such as for example Lumiglass frits, having a yellow-green color and a thickness of about 3 to 5 mm, located at the top surface side of the container, the container encompassing an inner-component, said inner-component comprising an electroluminescent light-emitting element comprising a white light emitting electroluminescent pigment and said electroluminescent light-emitting element together with the anode and the cathode having a thickness of about 1 mm and said three components each having a width of about 10 cm. The applied electroluminescent pigment in such a line marker of the invention is preferably ZnS: Cu, Al, according to the invention.

An embodiment of the invention is the marker according to the invention, wherein the integrated electric circuit is provided with means for receiving a signal, preferably wireless means, said signal provided by preferably at least one sensor, an antenna and/or a reflector, more preferably at least one sensor, such that the activation of the momentary switch and/or the activation of the dimmer is controlled by the intensity of the received signal.

An embodiment of the invention is the marker according to the invention, wherein the sensor is one or more of a sensor for sensing light intensity, number of passing objects such as vehicles, velocity of passing objects, moisture at or surrounding the marker, fog, type and/or intensity of precipitation, temperature, smoke, gas, motion of an object in the surrounding of the marker, motion of the marker, flue, fire, wear of the marker, day light intensity, an object.

An embodiment of the invention is the marker according to the invention, wherein the luminescence of the electroluminescent light-emitting element is remotely controllable.

An embodiment of the invention is the marker according to the invention, wherein the integrated electric circuit comprises a microprocessor such that the luminescence of the electroluminescent light-emitting element is programmable.

Providing the marker of the invention with a microprocessor allows for controlling the luminescence of the marker, such as remotely controlling, according to the invention. In addition, providing the marker of the invention with a microprocessor allows for autonomous operation of the marker, according to the invention. For example, a signal provided by *e.g.* a remote sensor or system of sensors to the marker, is autonomously processed by an integrated electronic circuit comprising the microprocessor, comprised by the marker of the invention, and subsequently, the integrated electronic circuit autonomously provides the integrated electric circuit with a predetermined signal resulting in adaptation of the luminescence to current circumstances, according to the invention. For example, the marker of the invention autonomously shifts from off to on when a sensor senses a threshold intensity decrease of the daylight, whereupon the integrated electronic circuit of the marker receives a predetermined signal, resulting in operation of the momentary switch and/or dimmer, according to the invention.

An embodiment of the invention is the marker according to the invention, suitable for use at the surface of a road and/or for use when at least partly embedded or integrated in the surface of a road.

It is appreciated by the skilled person that the material selected for the container of the marker of the invention, is selectable related to its strength and wear resistance, when the marker is *e.g.* implemented in the top layer of a road surface, such as in a pre-formed slit in the asphalt, according to the invention. Of course, wear resistance is of concern when the marker is applied under circumstances where objects such as vehicles and/or subjects cross the marker, and therefore, for such applications of the marker of the invention, the container is made of the suitable material with regard to (partial) transparency, together with a suitable strength and wear resistance, as the circumstances may require, according to the invention.

According to the invention, the marker of the invention is suitably provided with power from various power supplies, known in the art. The marker is for example provided with at least one voltage converter, such that the marker of the invention is suitably connected to a grid, according to the invention. Alternatively, such marker of the invention is provided with a battery electrically connected to the converter and further electrically connected to for example a photovoltaic cell, any means which converts wind energy in electrical energy, such as means involving one or more wind mills, any means which converts hydropower in electrical energy, any means which converts tidal flow in electrical energy, *etc*., *etc*., according to the invention. Of course, equally applicable is the marker of the invention provided with means to receive power from a conventional generator or battery, the battery to be replaced when empty, according to the invention.

A second aspect of the invention is the use of a marker according to any of the aforementioned embodiments, for guiding the movement of at least one object such as a vehicle, and/or of at least one subject, by providing with the marker a predetermined intensity and/or at least one color of the luminescence of the electroluminescent light-emitting element, and/or by providing with the marker a predetermined alternation of the intensity and/or at least one color of the luminescence of the electroluminescent light-emitting element, such that the movement of the object and/or the subject is within a predetermined range of velocity and/or in a predetermined direction.

As said before, it is one of the many benefits of the marker of the current invention that the marker is provided with an electroluminescent light-emitting element comprising one, two, three, four, five, *etc*., electroluminescent pigments, of which luminescence is simultaneously adjustable and controllable separately from each other. Thus, markers of the invention comprising multiple luminescent pigments, being able to luminesce an array of different colors one after another or simultaneously, are suitable for the abovementioned use according to the invention, as well as one or multiple markers of the invention comprising a single type of luminescent pigment, according to the invention. For example, a marker of the invention comprising multiple pigments capable of providing multiple discrete colors, is applied for the purpose of being able to provide vehicles or subjects with a change in color of the emitted light by the marker, whereby each color contains a separate message or discrete information, according to the invention. For example, a marker of the invention comprises a pigment for red luminescence and a further pigment for green luminescence, providing the marker with the capability to provide a red or green sign, suitable for example to provide the public with the information whether entrance of *e.g.* a platform or use of a driver lane is allowed or not, *etc.* This is just one example of the plethora of possibilities for use of the single-colored marker of the invention or the multi-colored marker of the invention, as is appreciated by the skilled person.

The present invention will be illustrated further by means of the following non-limiting Examples.

### EXAMPLES

### Examples 1-5: Markers according to different embodiments of the invention

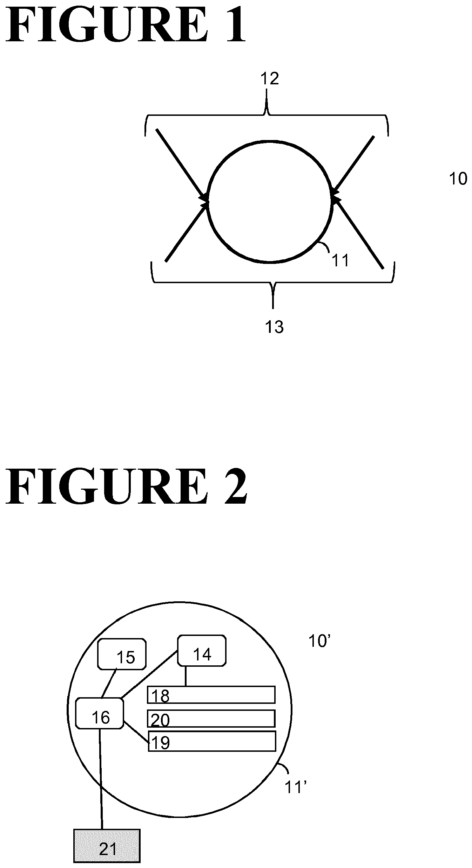

Figure 1 shows the cross sectional view of a marker constructed according to an embodiment of the invention. The marker **10** comprises a container **11** having the extended shape of a tube (circular cross-section), upper surface part **12**, lower surface part **13**.

Figure 2 shows a schematic drawing of a marker constructed according to a second embodiment of the invention. The marker **10'** comprises a container **11'** having the extended shape of a tube (circular cross-section), a dimmer **14**, a momentary switch **15**, electrically connected to an integrated electric circuit **16**. The container further encompasses an inner-component **17**, said inner-component comprising an anode **18** and a cathode **19**, and an electroluminescent light-emitting element **20**. The integrated electric circuit is electrically connected with a power supply **21**.

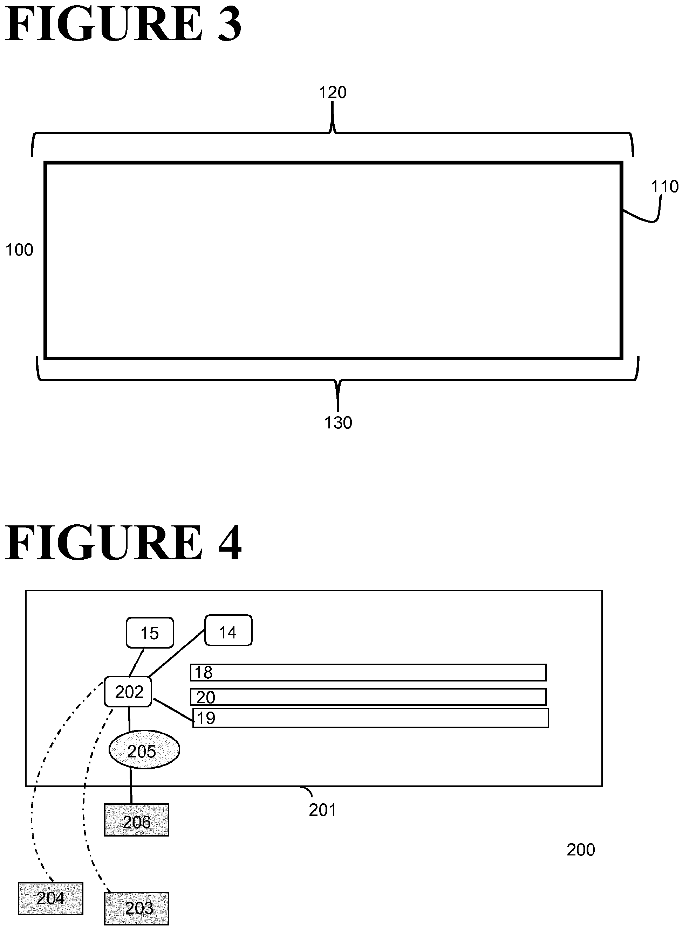

Figure 3 schematically shows a cross-sectional view of a marker constructed according to a third embodiment of the invention. The marker **100** comprises a container shaped as an elongated strip **110**. The upper surface part **120** and lower surface part **130** of the container are indicated.

Figure 4 schematically represents a marker **200** constructed according to a fourth embodiment of the invention. The marker is provided with a rod shaped container **201**. The integrated electric circuit **202** is wirelessly connected to remote sensors **203**, remote controller **204**, and is provided with a converter **205** electrically connected with a grid **206**.

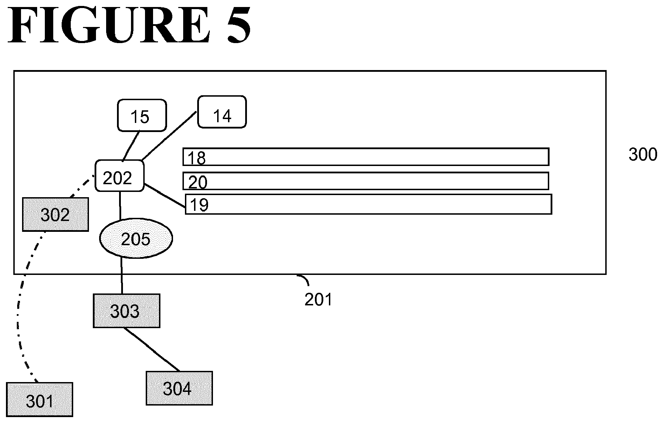

Figure 5 is a schematic representation of a marker **300** constructed according to a fifth embodiment of the invention. The marker functions autonomously, receives input signals from wirelessly connected remote sensors **301**, which input signals are processed by a microprocessor 302, autonomously resulting in the marker emitting electroluminescent radiation to a certain extent and of a selected color. The marker **300** is electrically connected to a battery **303**, which in turn is electrically connected with a photovoltaic cell **304**.

### Example 6. Marker of the invention comprising an extended cuboid shaped container having a rectangular cross section

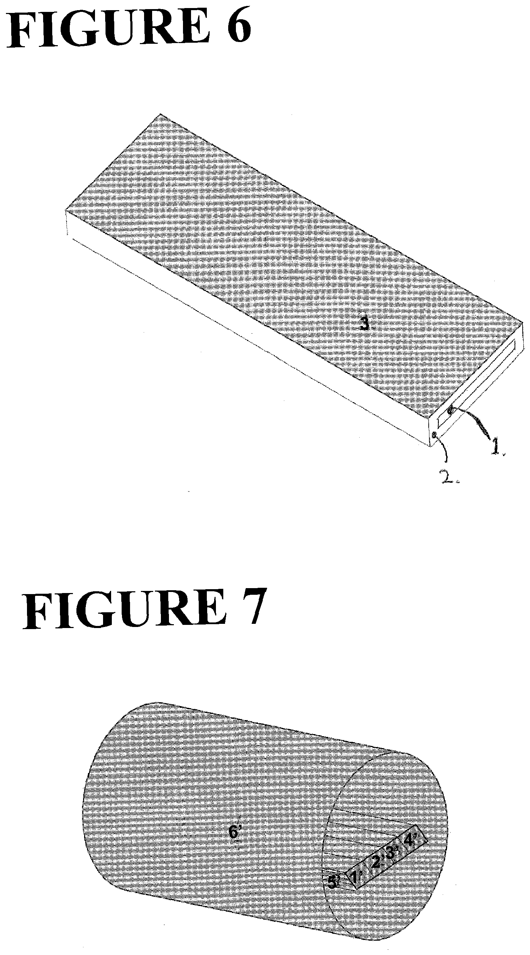

Figure 6 shows a cross sectional view of a marker according to the invention.

The marker is provided with a container **2** shaped as a line encompassing an inner-component, said inner-component comprising an anode layer and a cathode layer, an integrated electric circuit electrically connected thereto, and an electroluminescent light-emitting element comprising one electroluminescent pigment emitting white light. The container **2** is made of epoxy resin and is provided with a top layer **3** at the top surface part of the container **2**, said top layer made of Lumiglass frits with a thickness of about 3 to 5 mm and having a yellow-green color. The layers of the two electrodes and the electroluminescent light-emitting element are provided as an electroluminescent ribbon **1** having a width of about 10 cm and a thickness of about 1 mm. The marker is further comprising an AC/DC adapter receiving an input voltage of 100 V to 240 V and providing an output voltage to the electrodes of 12 V. The marker further comprises a momentary switch as a controller for switching the integrated electric circuit on and off, thereby activating or deactivating the electroluminescent light-emitting element.

### Example 7. Marker of the invention comprising an extended tubular container having a circular cross section

Figure 7 shows a cross sectional view of a marker according to the invention.

The marker is provided with a container **6'** shaped as a tube with an approximate inner diameter of 3 cm and encompassing an inner-component, said inner-component comprising an anode layer and a cathode layer, an integrated electric circuit electrically connected thereto, and an electroluminescent light-emitting element, altogether together forming the indicated assembly 5', wherein the electroluminescent light-emitting element comprises four lanes with each lane made of a different electroluminescent pigment **1'-4'** emitting red light, green light, blue light and white light, respectively. The container **6'** is made of polyurethane acrylate resin. The marker is further comprising as a power source an AC/DC adapter receiving an input voltage of 100 V to 240 V and providing an output voltage to the electrodes of 24 V, herewith facilitating a current of 3 A. The marker further comprises a switch as a controller for switching the integrated electric circuit on and off, thereby activating or deactivating the electroluminescent light-emitting element, and further for selecting the emission of luminescent light provided by any of the four different lanes comprising the four different electroluminescent pigments **1'-4'**.

## Claims

1. A marker comprising a container, said container comprising at least a top surface part and a bottom surface part, the container encompassing an inner-component, said inner-component comprising at least two conducting layers, an integrated electric circuit electrically connected thereto, and an electroluminescent light-emitting element comprising at least one electroluminescent pigment, wherein said electroluminescent light-emitting element is embedded between a conducting anode layer and a conducting cathode layer for driving said electroluminescent light-emitting element and wherein at least the conducting layer located near the top surface part of the container and at least said top surface part of the container are made of optically transparent material or optically opaque material, and wherein the container is provided with means arranged for supplying electrical power to said conducting layers.

2. Marker according to claim 1, wherein the integrated electric circuit is further provided with a dimmer and/or a momentary switch to dim and/or to actuate the luminescing of the electroluminescent light-emitting element.

3. Marker according to claim 1 or 2, wherein the optically transparent or optically opaque container is made of a material selected from: glass made of acrylate resin, two-component epoxy resin, two-component polyurethane resin, one-component polyurethane resin, polyester resin, silicone, polycarbonate plastic, polyvinyl chloride, plastisol, polypropylene, polyethylene and thermoplastic, preferably glass made of acrylate resin, polyester resin, a polyurethane resin, a polyurethane acrylate resin and silicone.

4. Marker according to any of the claims 1 to 3, wherein the anode layer and the cathode layer are selected from: indium, carbon, nanotubes comprising conducting coating, film comprising graphene, silver nanowire covered with graphene, intrinsically conducting polymer or conducting polymer such as polyaniline and poly(3,4-ethylenedioxythiophene) polystyrene sulfonate, and inorganic conducting materials comprising aluminum, gallium, and indium, and doped zinc oxide such as zinc oxide doped with aluminum, gallium or indium, wherein the anode layer and the cathode layer preferably are the same.

5. Marker according to any of the claims 1 to 4, wherein the container is an extended container, such as a tube, a ribbon, a strip, a beam, preferably a tube or a strip.

6. Marker according to any of the claims 1 to 5, wherein the extended container has a length of between about 1 cm and about 100 km, preferably between about 50 cm and about 30 km, more preferably between about 100 cm and about 10 km, most preferably between about 10 m and about 1 km.

7. Marker according to any of the claims 1 to 6, wherein the electroluminescent light-emitting element comprises at least two electroluminescent pigments that luminesce at different wavelengths, wherein the at least two electroluminescent pigments are spatially separated, such that the marker can luminesce at least two colors.

8. Marker according to any of the claims 1 to 7, wherein the at least one electroluminescent pigment is selected from: zinc oxide, aluminum oxide and a mixture of zinc oxide and aluminum oxide, said pigment comprising one or more selected from: SrAl₂O₄: Eu, Dy, and Sr₄Al₁₄O₂₅:Eu²⁺Dy₃, and Sr₂MgSi₂O₇;Eu²⁺, and CaAl₁₂O₄:Eu²⁺, Nd³⁺, and Y₂Al₂O₄: Eu²⁺, Nd³⁺, and CaAl₂O₄; Eu²⁺, Nd³⁺, and Y₂Al₂O₄:Eu²⁺, Nd³⁺, and Al₂O₃ and ZnO, or selected from ZnS such as ZnS:Cu, YAG and ZnS;Cu, Mn, and ZnS:Cu, Dy, and ZnS:Cu, Al, and (Zn, Cd) S:Cu (Zn Cd) S:Cu, and ZnS:Cu, Mn, and ZnS:Cu, Mn, and (Zn, Cd)(S,Se):Cu, preferably the electroluminescent pigment is ZnS: Cu, Al.

9. Marker according to any of the claims 1 to 8, wherein the extended container is a tube with an outer-diameter of between about 0.5 cm and about 5 cm, preferably about 3.5 cm, and with an inner diameter of about 0.4 cm and 4.9 cm, preferably about 3.0 cm, wherein the tube is made of polyurethane acrylate resin, wherein the electroluminescent pigment is ZnS: Cu, Al.

10. Marker according to any of the claims 1 to 8, wherein the extended container is a strip with a length of between about 1 cm and about 100 m, a width of between about 10 cm and 100 m, a thickness of between about 0.5 cm and about 5 cm, preferably the length is between about 25 cm and about 10 m, preferably the width is between about 50 cm and about 50 m, preferably the thickness is between about 1 cm and 2 cm, wherein the strip is made of epoxy resin, wherein the electroluminescent pigment is ZnS: Cu, Al.

11. Marker according to any of the claims 1 to 10, wherein the integrated electric circuit is provided with means for receiving a signal, preferably wireless means, said signal provided by preferably at least one sensor, an antenna and/or a reflector, more preferably at least one sensor, such that the activation of the momentary switch and/or the activation of the dimmer is controlled by the intensity of the received signal.

12. Marker according to claim 11, wherein the sensor is one or more of a sensor for sensing light intensity, number of passing objects such as vehicles, velocity of passing objects, moisture at or surrounding the marker, fog, type and/or intensity of precipitation, temperature, smoke, gas, motion of an object in the surrounding of the marker, motion of the marker, flue, fire, wear of the marker, day light intensity, an object.

13. Marker according to any of the claims 1 to 12, wherein the luminescence of the electroluminescent light-emitting element is remotely controllable.

14. Marker according to any of the claims 1 to 13, wherein the integrated electric circuit comprises a microprocessor such that the luminescence of the electroluminescent light-emitting element is programmable.

15. Use of a marker according to any of the claims 1 to 14, for guiding the movement of at least one object such as a vehicle, and/or of at least one subject, by providing with the marker a predetermined intensity and/or at least one color of the luminescence of the electroluminescent light-emitting element, and/or by providing with the marker a predetermined alternation of the intensity and/or at least one color of the luminescence of the electroluminescent light-emitting element, such that the movement of the object and/or the subject is within a predetermined range of velocity and/or in a predetermined direction.
